(19) Europäisches Patentamt / European Patent Office / Office européen des brevets

(11) **EP 2 489 989 B1**

(12) **EUROPEAN PATENT SPECIFICATION**

(45) Date of publication and mention
of the grant of the patent:
**15.11.2017 Bulletin 2017/46**

(51) Int Cl.:
***G01D 5/36*** *(2006.01)*   ***G01D 5/38*** *(2006.01)*
***G01D 5/347*** *(2006.01)*   ***G01D 5/244*** *(2006.01)*

(21) Application number: **12167432.9**

(22) Date of filing: **13.12.2005**

(54) **Photoelectronic encoder**

Fotoelektronischer Positionsgeber

Codeur photoélectrique

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **13.12.2004 JP 2004360089
10.05.2005 JP 2005137591
12.12.2005 JP 2005357658**

(43) Date of publication of application:
**22.08.2012 Bulletin 2012/34**

(62) Document number(s) of the earlier application(s) in
accordance with Art. 76 EPC:
**05816701.6 / 1 826 535**

(73) Proprietor: **Nikon Corporation
Tokyo 108-6290 (JP)**

(72) Inventor: **Imai, Toru
Chiyoda-ku, Tokyo 100-8331 (JP)**

(74) Representative: **Ter Meer Steinmeister & Partner
Patentanwälte mbB
Artur-Ladebeck-Strasse 51
33617 Bielefeld (DE)**

(56) References cited:
**JP-A- 2002 243 503     US-A- 3 756 723
US-A- 6 005 667**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a photoelectric encoder.

BACKGROUND ART

A photoelectric encoder according to the preamble of claim 1, in which the displacement of a movable member is converted into a signal, is disclosed in Patent Document 1. In the case of the photoelectric encoder, illumination light beams are projected onto a movable grating or grid (reference numeral 15 shown in Fig. 1 of Patent Document 1) which is movable together with the movable member and an index grating or grid (reference numeral 14 shown in Fig. 1 of Patent Document 1) which is fixed. The intensities of the illumination light beams transmitted through the both gratings are detected by a light-receiving element (reference numeral 16 shown in Fig. 1 of Patent Document 1) as the information to indicate the amount of discrepancy between the both gratings. The output signal from the light-receiving element is periodically changed in accordance with the movement of the movable grating. Accordingly, it is possible to detect the minute displacement (moving) amount of the movable member from the intensity of the signal. Similar encoders are described in US 3 756 723 A and US 6 005 667 A.

In general, the following artifice is applied to the photoelectric encoder of this type. That is, the intensities of the respective illumination light beams individually transmitted through the respective areas on the movable grating and the index grating are individually detected by a plurality of light-receiving surfaces of the light-receiving element. Further, the arrangements of the grating patterns of the movable grating and the index grating are designed so that the discrepancy amount between the gratings is deviated little by little between the areas. In this case, the output signals from the respective light-receiving surfaces are periodically changed respectively at mutually different phases in accordance with the movement of the movable member. Therefore, it is possible to detect the amount of movement and the direction of movement (i.e., the displacement) of the movable member according to the intensities of the signals.

Patent Document 1: Japanese Patent Application Laid-open No. 2002-243503

DISCLOSURE OF THE INVENTION

Problem to be Solved by the Invention:

However, in this photoelectric encoder, the illumination light beams, which are transmitted through the mutually different areas on the movable grating, are used in order to generate the signals which have the mutually different phases. Therefore, when the posture or attitude of the movable grating is fluctuated, the following problem arises. That is, the phase relationship between the signals is fluctuated, and thus the accuracy of detection of the displacement is deteriorated. Accordingly, an object of the present invention is to provide a photoelectric encoder which makes it possible to correctly generate a signal which represents the displacement of a movable member even when any posture fluctuation arises in the grating.

Means for Solving the Problem:

According to the present invention, there is provided a photoelectric encoder as specified in claim 1. Optional features of the invention are indicated in the dependent claims.

In the photoelectric encoder described above, the light source may be capable of radiating the illumination light beam as a plurality of illumination light beams having mutually different angles, and the modulator may periodically switch the plurality of illumination light beams. In the photoelectric encoder described above, each of the movable grating and the index grating may be a diffraction grating, and an optical system may be arranged to form a grating image of the index grating on the movable grating by a pair of diffracted light beams generated by the index grating.

In the photoelectric encoder described above, the optical system may include a reflection member which deflects the pair of diffracted light beams respectively so as to overlay the pair of diffracted light beams in a same area on the movable grating. In the photoelectric encoder described above, the modulator may periodically change a phase difference between the pair of diffracted light beams. In the photoelectric encoder described above, the modulator may perform periodic change of the light with a waveform in which rising and falling are symmetrical with each other; and the displacement detector may extract, as a signal of the displacement, a specified frequency component of time-dependent change of an intensity of the illumination light beam received by the light-receiver.

In the photoelectric encoder described above, the modulator may perform periodic change of the light with a waveform in which rising and falling are asymmetrical with each other; and the displacement detector may extract, as a signal of the displacement, a phase of time-dependent change of an intensity of the illumination light beam received by the light-receiver. In the photoelectric encoder described above, the displacement detector may further include a control unit which generates a signal of an amplitude of periodic change of the light together with a signal of the displacement and which monitors the signal of the amplitude and controls the modulator to make the signal of the amplitude to be constant.

In the photoelectric encoder described above, the displacement detector may further include a control unit which generates a signal of a light amount of the illumination light beam together with a signal of the displacement and which monitors the signal of the light amount and controls the light source to make the signal of the light amount to be constant.

In the photoelectric encoders according to the present invention, the modulator may be an actuator which fluctuates the illumination light beam which comes into the index grating. The light source may be a point light source array, and the modulator may drive point light sources of the point light source array. In the photoelectric encoder described above, the index grating may be irradiated with the illumination light beam to form one of a projection image and a grating image of the index grating on the movable grating.

Effect of the Invention:

According to the present invention, the photoelectric encoder is realized, which makes it possible to reliably generate the signal representing the displacement of the movable member even when any posture fluctuation arises in the grating.

BRIEF DESCRIPTION OF THE DRAWINGS

Fig. 1 shows a construction of an encoder, for explaining a first embodiment.
Fig. 2 shows a relationship between modulation factor 2d and Bessel expansion coefficient $J_n$ (n = 1, 2,...).
Figs. 3(a) to 3(e) show time-dependent change waveforms of an interference signal I when a displacement x of a movable diffraction grating 15 has respective values.
Fig. 4 conceptually shows an extraction operation performed by a 1st-order component detection circuit 22 and a 2nd-order component detection circuit 23.
Fig. 5 shows a construction of an encoder, for explaining a second embodiment.
Figs. 6(a) to 6(c) show time-dependent change waveforms of the interference signal I when a displacement x of a movable diffraction grating 15 has respective values.

Legends of Reference Numerals:

11: light source, 12: collimator lens, 13: index diffraction grating, 14A, 14B: mirror, 15: movable diffraction grating, 16: light-receiving element, 17: actuator, 21: light-receiving circuit, 22: 1st-order component detection circuit, 23: 2nd-order component detection circuit, 24: 3rd-order component detection circuit, 25: 4th-order component detection circuit, 26: clock circuit, 30: light source driving circuit, 31: zero-order component detection circuit, 32: light amount control circuit, 40: sawtooth wave-generating circuit.

BEST MODE FOR CARRYING OUT THE INVENTION

First Design

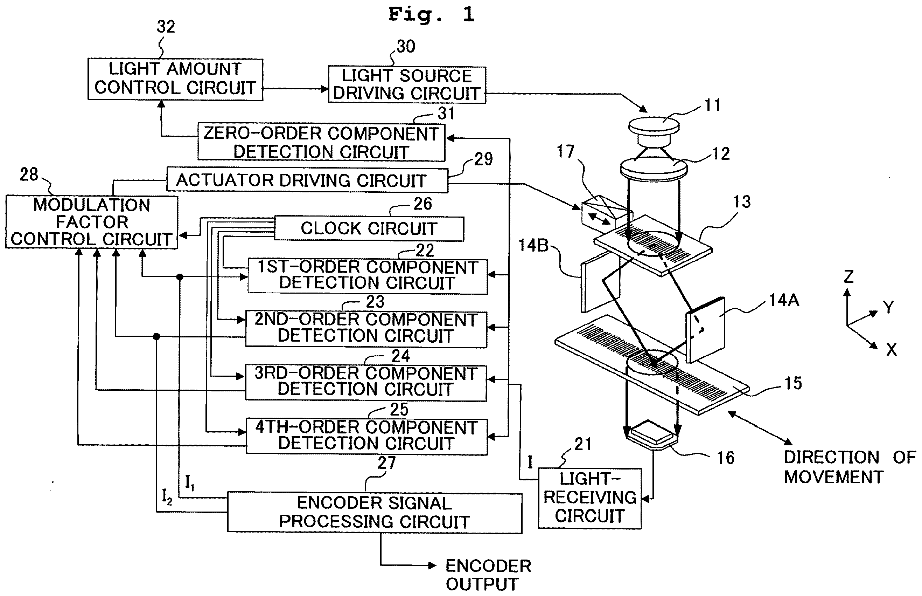

A first design of an encoder will be explained below. This design is directed to a photoelectric linear encoder of the diffracted light interference system. At first, a construction of the encoder of this design will be explained. Fig. 1 shows the construction of this encoder. An optical system part (component) of the encoder of this design includes, for example, a light source 11, a collimator lens 12, an index diffraction grating 13 as a reference member, mirrors 14A, 14B, a movable diffraction grating 15 as a scale, and a light-receiving element 16. The index diffraction grating 13 functions as an optical separator element which separates or divides the light beam radiated from the light source 11 into a plurality of light beams. The optical system part of the encoder of this design is provided with an actuator 17 for vibrating the index diffraction grating 13. The index diffraction grating 13 is vibrated in the direction which is perpendicular to the grating lines and which is parallel to the surface, of the index diffraction grating 13, on which the grating is formed.

The light source 11 is a laser light source which emits or radiates, for example, a laser beam having a wavelength λ = 850 nm. The index diffraction grating 13 and the movable diffraction grating 15 are transmission type diffraction gratings, which are, for example, phase type diffraction gratings. The grating pitch p of the index diffraction grating 13 is mutually the same as that of the movable diffraction grating 15, which is set to be not more than 50 μm, for example, about 8 μm. The actuator 17, which functions as a modulator, is constructed of, for example, a piezoelectric element. The actuator 17 is capable of making vibration at a vibration width or amplitude of several μm and a frequency of about 20 to 30 kHz.

In particular, the mutual positions of the light source 11, the collimator lens 12, the mirrors 14A, 14B, the light-receiving element 16, and the actuator 17 are fixed. On the contrary, the movable diffraction grating 15 is displaced together with an unillustrated movable member (measurement objective). The direction of the displacement is parallel to the surface of the movable diffraction grating 15 on which the grating is formed, and is perpendicular to the grating lines. Fig. 1 shows an XYZ rectangular coordinate system of the right-handed scale in which the X direction is the direction of movement of the movable diffraction grating 15, the Y direction is the grating line direction of the movable diffraction grating 15, and Z direction is the normal line direction of the movable diffraction grating 15. The following explanation will be made as based on the use of the rectangular coordinate system, if necessary.

Other than the above, the encoder of this design has a circuit part (component) which includes, for example, a light-receiving circuit 21, a 1st-order component detection circuit 22, a 2nd-order component detection circuit 23, a 3rd-order component detection circuit 24, a 4th-order component detection circuit 25, a clock circuit 26, an encoder signal processing circuit 27, a modulation factor control circuit 28, an actuator driving circuit 29, a light source driving circuit 30, a zero-order component detection circuit 31, and a light amount control circuit 32.

Next, the operation of the optical system part of the encoder of this design will be explained. The light source 11 emits the illumination light beam. The illumination light beam is converted into a parallel light beam by the collimator lens 12, then is allowed to come into the index diffraction grating 13 to brought about the diffracted light beams of the respective orders in accordance with the diffracting function of the index diffraction grating 13. The index diffraction grating 13 generates the ±1st-order diffracted light beams on the basis of the light beam allowed to come thereinto. The index diffraction grating 13 is formed with the diffraction grating of the phase type which does not generate any light beam other than the ±1st-order diffracted light beams, for example, the zero-order light beam, the ±2nd-order diffracted light beams, and the higher-order diffracted light beams or which generates the zero-order light beam, the ±2nd-order diffracted light beams, and the higher-order diffracted light beams which are extremely weak as compared with the intensities of the ±1st-order diffracted light beams. The ±1st-order diffracted light beams, which are generated by the index diffraction grating 13, are individually deflected by the mirrors 14A, 14B, and then they are overlaid or superimposed in a same area of the movable diffraction grating 15 to form a grating image of the index diffraction grating 13 in this area. That is, the ±1st-order diffracted light beams come into the same position of the movable diffraction grating 15. The ±1st-order diffracted light beams, which are allowed to come into this position, are further diffracted again by the diffracting function of the movable diffraction grating 15 to come into the light-receiving element 16 in a state of being interfered with each other. The light-receiving element 16 outputs a signal (hereinafter referred to as "interference signal I") which indicates the interference intensity of the interference light beam allowed to pass through the movable diffraction grating 15.

In the encoder of this design as described above, the actuator 17 is driven during the period in which the movable diffraction grating 15 is displaced with respect to the index diffraction grating 13. When the actuator 17 is driven, then the position of the index diffraction grating 13 is periodically modulated in the X direction, and the phase difference between the ±1st-order diffracted light beams is periodically modulated. When the phase difference is periodically modulated, the phase of the grating image on the movable diffraction grating 15 is periodically modulated (and hence the bright/dark pattern of the grating image is periodically modulated in the X direction). Therefore, the interference signal I is changed in a time-dependent manner. This will be explained in detail below.

At first, a situation is assumed, in which the actuator 17 is not driven. In this situation, it is assumed that x represents the displacement of the movable diffraction grating 15 in the X direction on the basis of the index diffraction grating 13. On this assumption, the complex amplitude $I_+$ of the +1st-order diffracted light beam incoming into the light-receiving element 16 and the complex amplitude $I_-$ of the -1st-order diffracted light beam are represented by the following expressions (1) and (2). In this case, the light amount (amplitude) of the illumination light beam of each of the diffracted light beams is expressed by being normalized to 1. The symbol "j" indicates the unit complex number.

$$I_+ = \exp[2j\pi x/p] \qquad\qquad \ldots(1)$$

$$I_- = \exp[-2j\pi x/p] \qquad\qquad \ldots(2)$$

Therefore, the interference signal I is represented by the function of the displacement x of the movable diffraction

**4**

grating 15 as represented by the following expression (3).

$$I = (1/2) \bullet |\exp[2j\pi x/p] + \exp[-2j\pi x/p]|^2 \qquad \ldots (3)$$

Next, a situation is assumed, in which the actuator 17 is driven. In this situation, the index diffraction grating 13 is vibrated (periodically modulated) in the X direction on the basis of a predetermined position. The waveform (hereinafter referred to as "modulation waveform") of the position of the index diffraction grating 13, which is changed in a time-dependent manner during the modulation, is a sine wave (sinwt) having an angular frequency w and an amplitude $\varepsilon$ (half amplitude: $\varepsilon/2$). In the following description, the modulation factor $2d = 2\pi\varepsilon/p$ is defined as an index to indicate the wideness of the amplitude $\varepsilon$ on the basis of the grating pitch p. According to the periodical modulation as described above, the phase of the +1st-order diffracted light beam and the phase of the -1st-order diffracted light beam are subjected to the modulation in the mutually opposite directions. In other words, the phase difference between the +1st-order diffracted light beam and the -1st-order diffracted light beam is modulated.

Therefore, in the encoder of this design , the complex amplitude $I_+$ of the +1st-order diffracted light beam and the complex amplitude $I_-$ of the -1st-order diffracted light beam are represented by the following expressions (4) and (5).

$$I_+ = \exp[2j\pi x/p - j\pi\varepsilon/p \bullet \sin(\omega t)] \qquad \ldots (4)$$

$$I_- = \exp[-2j\pi x/p + j\pi\varepsilon/p \bullet \sin(\omega t)] \qquad \ldots (5)$$

The expressions (4) and (5) are represented by the following expressions (6) and (7) with the modulation factor $2d = 2\pi\varepsilon/p$.

$$I_+ = \exp[2j\pi x/p - jd \bullet \sin(\omega t)] \qquad \ldots (6)$$

$$I_- = \exp[-2j\pi x/p + jd \bullet \sin(\omega t)] \qquad \ldots (7)$$

Therefore, the interference signal I is represented by the function of the time t and the displacement x of the movable diffraction grating 15 as represented by the following expression (8).

$$
\begin{aligned}
I &= (1/2) \bullet |\exp[2j\pi x/p - jd \bullet \sin(\omega t)] \\
&\quad + \exp[-2j\pi x/p + jd \bullet \sin(\omega t)]|^2 \\
&= 1 + \cos[4\pi x/p - 2d \bullet \sin(\omega t)] \\
&= 1 + \cos(4\pi x/p) \bullet \cos[2d \bullet \sin(\omega t)] \\
&\quad + \sin(4\pi x/p) \bullet \sin[2d \bullet \sin(\omega t)] \qquad \ldots (8)
\end{aligned}
$$

When the expression (8) is arranged (subjected to the Bessel series expansion) in relation to the time t, the following expression (9) is obtained.

$$I = 1 + J_0(2d) \cdot \cos(4\pi x/p)$$

$$+ 2J_1(2d) \cdot \sin(4\pi x/p) \cdot \sin(\omega t)$$

$$+ 2J_2(2d) \cdot \cos(4\pi x/p) \cdot \cos(2\omega t)$$

$$+ 2J_3(2d) \cdot \sin(4\pi x/p) \cdot \sin(3\omega t)$$

$$+ 2J_4(2d) \cdot \cos(4\pi x/p) \cdot \cos(4\omega t)$$

$$+ \ldots \qquad \ldots (9)$$

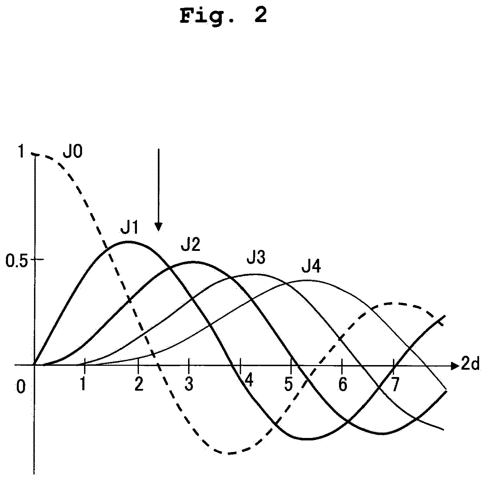

However, $J_n$ represents the nth-order Bessel expansion coefficient, which has a constant value provided that the modulation factor 2d is constant. Incidentally, the relationship between the modulation factor 2d and the Bessel expansion coefficient $J_n$ (n = 1, 2,...) is as shown in Fig. 2.

According to the expression (9), the zero-order component $I_0$, the 1st-order component $I_1$, the 2nd-order component $I_2$, the 3rd-order component $I_3$, and the 4th-order component $I_4$,... of the time-dependent change of the interference signal I are represented by the following expression (10) respectively. The zero-order component $I_0$ is the intensity of the frequency component which is not changed in the time-dependent manner. The nth-order component $I_n$ is the intensity of the frequency component which is changed in the time-dependent manner at the angular frequency nw.

$$I_0 = 1 + J_0(2d) \cdot \cos(4\pi x/p),$$

$$I_1 = 2J_1(2d) \cdot \sin(4\pi x/p),$$

$$I_2 = 2J_2(2d) \cdot \cos(4\pi x/p),$$

$$I_3 = 2J_3(2d) \cdot \sin(4\pi x/p),$$

$$I_4 = 2J_4(2d) \cdot \cos(4\pi x/p),\ldots \qquad \ldots (10)$$

Therefore, in the encoder of this design , a specified frequency component (for example, 1st-order component $I_1$) and another specified frequency component (for example, 2nd-order component $I_2$) of the time-dependent change of the interference signal I can be used as the sine signal and the cosine signal to represent the displacement x at the phases shifted from each other by 90°. In other words, in the encoder of this design , the interference signal I obtained from the light-receiving element 16 is changed in the time-dependent manner, although the encoder is provided with only one light-receiving element 16. Therefore, both of the sine signal and the cosine signal can be obtained from the time-dependent change.

Conventionally, distinct light-receiving elements have been separately used in order to obtain the sine signal and the cosine signal. Therefore, if the movable diffraction grating 15 is inclined, any discrepancy (factor of any measurement error) appears in the phase relationship between the sine signal and the cosine signal. On the contrary, in the encoder of this design , the same light-receiving element 16 is used in order to obtain the sine signal and the cosine signal. Therefore, an effect is obtained such that any discrepancy (factor of any measurement error) does not appear in the phase relationship between the sine signal and the cosine signal even when the movable diffraction grating 15 is inclined.

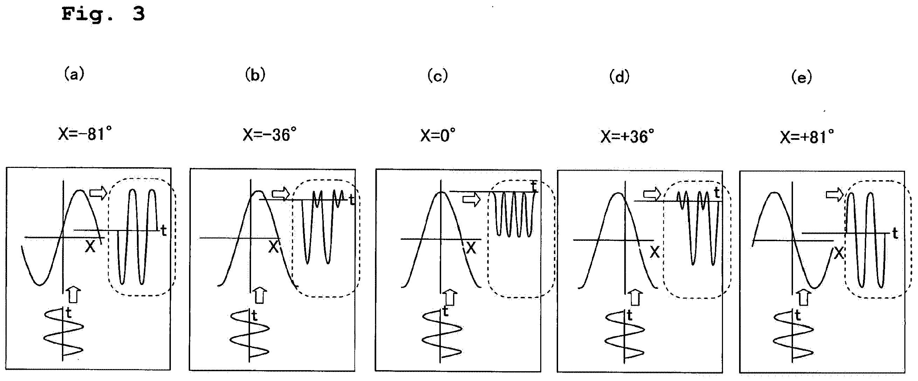

In the encoder of this design , the waveforms of the interference signal I changed in the time-dependent manner, which are provided when the displacement x of the movable diffraction grating 15 has the respective values, are as shown in Fig. 3. The waveforms of the interference signal I changed in the time-dependent manner, which are provided when the displacement x of the movable diffraction grating 15 (angular expression of the displacement x) is - 81°, -36°, 0°, 36°, and 81°, are shown in frames depicted by dotted lines in Figs. 3(a), 3(b), 3(c), 3(d), and 3(e) respectively. Upper-left drawings of Figs. 3(a), 3(b), 3(c), 3(d), and 3(e) indicate the displacement of the movable diffraction grating 15 respectively; and lower drawings indicate modulation waveforms, i.e., waveforms of modulation to be applied to the index diffraction grating 13. Upper-right drawings surrounded by dotted lines indicate waveforms of the interference signal I obtained in the respective situations.

As appreciated from in Fig. 3, when the displacement x differs in the encoder of this design , the intensity balance differs in relation to the respective frequency components contained in the waveform of the interference signal I changed in the time-dependent manner. In particular, when the displacement x is 0°, the intensity of the 2nd-order component ($\cos(2\omega t)$) is enhanced. Further, as the displacement x is larger in the plus direction, the intensity of the 1st-order component ($\sin(\omega t)$) is more enhanced. As the displacement x is larger in the minus direction, the intensity of the 1st-order component ($-\sin(\omega t)$) is more enhanced.

Incidentally, the waveform (upper-right part of Fig. 3(a)) of the interference signal I changed in the time-dependent manner, which is provided when the displacement x is -81°, amounts to the waveform formed by superimposing the modulation waveform (lower-left part of Fig. 3(a)) at the position of x = -81° with respect to the waveform brought about by the displacement x of the interference signal I during the period of no modulation (upper-left part of Fig. 3(a)). On the other hand, the waveform (upper-right part of Fig. 3(b)) of the interference signal I changed in the time-dependent manner, which is provided when the displacement x is -36°, amounts to the waveform formed by superimposing the modulation waveform (lower-left part of Fig. 3(b)) at the position of x = -36° with respect to the waveform brought about by the displacement x of the interference signal I during the period of no modulation (upper-left part of Fig. 3(b)).

Further, the waveform (upper-right part of Fig. 3(c)) of the interference signal I changed in the time-dependent manner, which is provided when the displacement x is 0°, amounts to the waveform formed by superimposing the modulation waveform (lower-left part of Fig. 3(c)) at the position of x = 0° with respect to the waveform brought about by the displacement x of the interference signal I during the period of no modulation (upper-left part of Fig. 3(c)). On the other hand, the waveform (upper-right part of Fig. 3(d)) of the interference signal I changed in the time-dependent manner, which is provided when the displacement x is +36°, amounts to the waveform formed by superimposing the modulation waveform (lower-left part of Fig. 3(d)) at the position of x = +36° with respect to the waveform brought about by the displacement x of the interference signal I during the period of no modulation (upper-left part of Fig. 3(d)).

Further, the waveform (upper-right part of Fig. 3(e)) of the interference signal I changed in the time-dependent manner, which is provided when the displacement x is +81°, amounts to the waveform formed by superimposing the modulation waveform (lower-left part of Fig. 3(e)) at the position of x = +81° with respect to the waveform brought about by the displacement x of the interference signal I during the period of no modulation (upper-left part of Fig. 3(e)).

Next, the operation of the circuit part of the encoder of this design will be explained. The light amount control circuit 32 drives and controls the light source 11 by the aid of the light source driving circuit 30. This control is performed so that the light amount of the illumination light beam is maintained to be constant.

The modulation factor control circuit (control unit) 28 provides a modulation signal composed of the sine wave to the actuator driving circuit 29 in accordance with the sine wave signal ($\sin\omega t$) having the angular frequency $\omega$ fed from the clock circuit 26 so as to drive and control the actuator 17. Accordingly, the position of the index diffraction grating 13 in the X direction is periodically modulated. In this control, the control is also performed so that the modulation factor 2d of the periodic modulation is maintained to have a constant value. The target value of the modulation factor 2d is set to "2.3". On this condition, the Bessel expansion coefficient "$J_0$" is 0 as shown by an arrow in Fig. 2.

The light-receiving circuit 21 continuously drives the light-receiving element 16. Further, the light-receiving circuit 21 continuously incorporates the interference signal I, which is outputted from the light-receiving element 16, to feed the interference signal I to the zero-order component detection circuit 31, the 1st-order component detection circuit 22, the 2nd-order component detection circuit 23, the 3rd-order component detection circuit 24, and the 4th-order component detection circuit 25 respectively. At least two of the detection circuits function as the units for detecting the displacement of the movable diffraction grating 15. The zero-order component detection circuit 31 extracts the zero-order component $I_0$ from the time-dependent change of the interference signal I which has been fed to the zero-order component detection circuit 31. The 1st-order component detection circuit 22 extracts the 1st-order component $I_1$ from the time-dependent change of the interference signal I. The 2nd-order component detection circuit 23 extracts the 2nd-order component $I_2$ from the time-dependent change of the interference signal I. The 3rd-order component detection circuit 24 extracts the 3rd-order component $I_3$ from the time-dependent change of the interference signal I. The 4th-order component detection circuit 25 extracts the 4th-order component $I_4$ from the time-dependent change of the interference signal I.

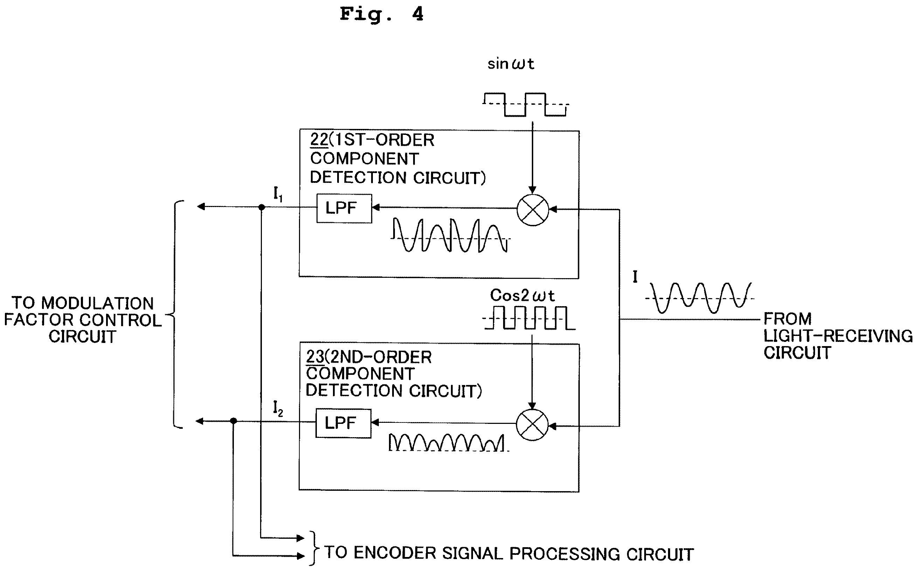

In particular, the extraction operation, which is performed by the 1st-order component detection circuit 22, the 2nd-order component detection circuit 23, the 3rd-order component detection circuit 24, and the 4th-order component detection circuit 25, is based on the synchronous detection or demodulation synchronized with the pulse signal fed from the clock circuit 26. Fig. 4 shows the concept of the extraction operation performed by the 1st-order component detection circuit 22 and the 2nd-order component detection circuit 23 which represent the circuits as described above. As shown in Fig. 4, a pulse signal having an angular frequency w fed from the clock circuit 26 (shown as "$\sin\omega t$" in Fig. 4) is inputted into the 1st-order component detection circuit 22. The 1st-order component detection circuit 22 combines the pulse signal with the interference signal I fed from the light-receiving circuit 21. The combined signal is smoothened by a low pass filter (LPF) to extract the 1st-order component $I_1$.

On the other hand, a pulse signal (shown as "$\cos 2\omega t$" in Fig. 4), which has an angular frequency 2w and which has a phase deviated by 90° from the phase of the pulse signal described above, is inputted into the 2nd-order component detection circuit 23 from the clock circuit 26. The 2nd-order component detection circuit 23 combines the pulse signal with the interference signal I fed from the light-receiving circuit 21. The combined signal is smoothened by a low pass filter (LPF) to extract the 2nd-order component $I_2$. The encoder signal processing circuit 27 shown in Fig. 1 incorporates the extracted 1st-order component $I_1$ and the 2nd-order component $I_2$, and generates the sine signal Ss which indicates the value of $\sin(4\pi x/p)$ and the cosine signal Sc which indicates the value of $\cos(4\pi x/p)$, on the basis of the components $I_1$, $I_2$, the Bessel expansion coefficients $J_1$, $J_2$ (constants), and the expression (10). The sine signal Ss and the cosine signal Sc are generated by the interference signal I obtained from the same light-receiving element 16 (generated by the illumination light beams allowed to pass through the identical area of the movable diffraction grating 15). Therefore, even if the posture of the movable diffraction grating 15 is fluctuated, the positional relationship between the both is not fluctuated.

The modulation factor control circuit 28 incorporates the extracted 1st-order component $I_1$, the 2nd-order component $I_2$, the 3rd-order component $I_3$, and the 4th-order component $I_4$ to monitor the modulation factor 2d of the periodic modulation actually performed in the encoder of this design (i.e., the actually measured value of the modulation factor 2d) on the basis of the components $I_1$, $I_2$, $I_3$, $I_4$ and the expression (10) (the modulation factor 2d is represented by "$I_1/I_3$", "$I_2/I_4$"). Further, the modulation factor control circuit 28 controls the actuator driving circuit 29 in the direction in which the monitored modulation factor 2d approaches the target value "2.3" described above. Accordingly, the modulation factor 2d is maintained to have the constant value (2.3) (subjected to the feedback control).

The light amount control circuit 32 incorporates the extracted zero-order component $I_0$ to control the light source driving circuit 30 in the direction in which the fluctuation of the zero-order component $I_0$ is suppressed. Accordingly, the light amount of the illumination light beam is maintained to have the constant value (subjected to the feedback control). The reason, why the light amount can be controlled with ease, is that the target value of the modulation factor 2d is "2.3". When the modulation factor 2d is "2.3", then the Bessel expansion coefficient $J_0 = 0$ is given, and the zero-order component $I_0$ indicates the light amount (amplitude) itself. According to the feedback control as described above, the measurement condition of the optical system part is maintained to be constant during the period in which the periodic modulation is effected. Therefore, it is possible to highly accurately detect the signal required for the encoder of this design (i.e., the time-dependent change of the interference signal I). Therefore, the sine signal Ss and the cosine signal Sc described above, which are generated in the encoder of this design , correctly represent the displacement x of the movable diffraction grating 15.

In this design , the ±1st-order diffracted light beams, which are generated by the index diffraction grating 13, are individually deflected by the mirrors 14A, 14B. However, in place of the mirrors 14A, 14B, it is also allowable to use, for example, an index diffraction grating having a grating pitch of 1/2 pitch with respect to the grating pitch of the index diffraction grating 13.

Second Design

A second design will be explained below. This design relates to a photoelectric encoder of the diffraction interference system. Only the difference from the first design (Fig. 1) will be herein explained. The second design differs from the first design in the circuit part.

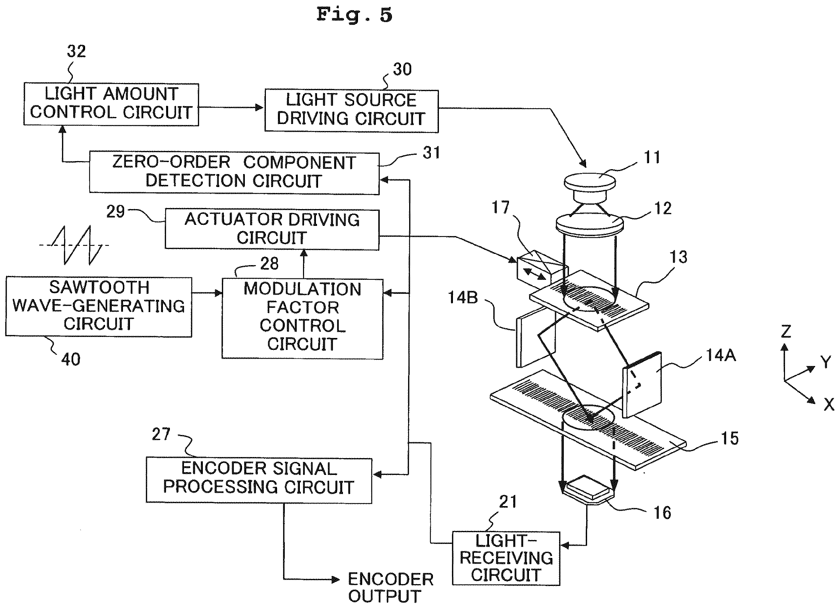

Fig. 5 shows a construction of the encoder of this design. The clock circuit 26, the 1st-order component detection circuit 22, the 2nd-order component detection circuit 23, the 3rd-order component detection circuit 24, and the 4th-orther component detection circuit 25 are omitted from the circuit part of the encoder of this design. Instead, a sawtooth wave-generating circuit 40 is provided. The modulation factor control circuit (control unit) 28 applies, to the actuator driving circuit 29, a modulation signal adapted to a signal fed from the sawtooth wave-generating circuit 40 to drive and control the actuator 17. Accordingly, the position of the index diffraction grating 13 in the X direction is periodically modulated with a sawtooth-shaped modulation waveform. The modulation factor 2d of the periodic modulation is set to $2\pi$.

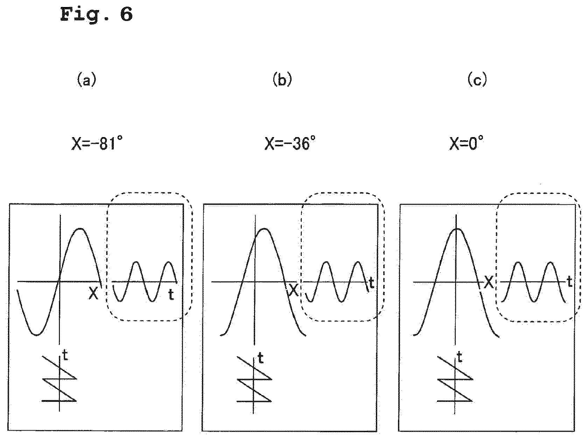

In the encoder of this design constructed as described above, the waveforms of the interference signal I changed in the time-dependent manner, which are provided when the displacement x of the movable diffraction grating 15 have respective values, are as shown in Fig. 6. The waveforms of the interference signal I changed in the time-dependent manner, which are provided when the displacement x of the movable diffraction grating 15 (angular expression of the displacement x) is -81°, -36°, and 0°, are shown in frames depicted by dotted lines in Figs. 6(a), 6(b), and 6(c) respectively. Fig. 6 is depicted in accordance with the same illustration method as that of Fig. 3.

As appreciated from Fig. 6, in the case of the encoder of this design , even when the displacement x has any value, the waveforms of the interference signal I changed in the time-dependent manner are identical with each other. When the displacement x differs, only the phase differs. The light-receiving circuit 21 shown in Fig. 5 continuously drives the light-receiving element 16. Further, the light-receiving circuit 21 continuously incorporates the interference signal I outputted from the light-receiving element 16, and the signal is fed to the encoder signal processing circuit 27, the modulation factor control circuit 28, and the zero-order component detection circuit 31 respectively.

The encoder signal processing circuit 27 extracts the phase of the waveform from the time-dependent change of the interference signal I which has been fed. The phase represents the displacement x of the movable diffraction grating 15 itself. The modulation factor control circuit 28 monitors the presence or absence of the point of inflection of the waveform from the time-dependent change of the fed interference signal I. The modulation factor control circuit 28 controls the actuator driving circuit 29 so that the point of inflection is reduced. Accordingly, the modulation factor 2d is maintained to have a constant value ($2\pi$) (subjected to the feedback control).

The zero-order component detection circuit 31 extracts the zero-order component $I_0$ from the time-dependent change of the fed interference signal I. The light amount control circuit 32 incorporates the zero-order component $I_0$ to control the light source driving circuit 30 in the direction in which the fluctuation of the zero-order component $I_0$ is suppressed. Accordingly, the light amount of the illumination light beam is maintained to have a constant value (subjected to the feedback control). As described above, according to the encoder of this design, it is possible to obtain the effect which is the same as or equivalent to that of the first design , although the encoder of this design has the relatively simple circuit construction.

This design is provided by changing the circuit part of the first design. However, it is also allowable that the circuit part of the second design is changed in the same manner as described above. In this design , the modulation factor 2d is set to $2\pi$. However, the same or equivalent effect can be obtained even when the modulation factor 2d is set to integral multiples of $2\pi$.

Embodiments

In the first design or the second design described above (encoder of the diffracted light beam interference system), the position of the index diffraction grating 13 is periodically modulated with the actuator 17 in order to periodically modulate the phase difference between the $\pm$1st-order diffracted light beams (in order to periodically modulate the phase of the grating image).

According to the invention, in the first design or the second design , another method or another modulator is adopted in order to periodically modulate the phase difference between the +1st-order diffracted light beam and the -1st-order diffracted light beam (in order to periodically modulate the phase of the grating image). For example, a method may be adopted, in which any difference is provided between the optical path length of the +1st-order diffracted light beam and the optical path length of the -1st-order diffracted light beam beforehand, and the wavelength of the light source 11 is periodically modulated. Although various methods are available to provide the difference between the optical path lengths of the two optical paths, a method may be adopted, for example, in which a plane-parallel plate is inserted into only one of the optical paths.

The synchronous detection or demodulation method is applied to the extraction operation using the 1st-order component detection circuit 22, the 2nd-order component detection circuit 23, the 3rd-order component detection circuit 24, and the 4th-order component detection circuit 25 of the first design. However, another method may be applied, which includes, for example, the amplitude measurement method such as the AC measurement and the amplitude measurement technique at a specified phase or a specified time.

In the encoder of the first design , the modulation waveform is set to the sine wave. However, it is also allowable to set another waveform in which the rising and the falling are symmetrical with each other. For example, it is also allowable to set, for example, a triangular wave. In the encoder of the second design , the modulation waveform is set to have the sawtooth-shaped form. However, it is also allowable to set another waveform in which the rising and the falling are asymmetrical with each other.

Any artifice may be applied to the encoder according to any one of the designs described above in order to improve the detection accuracy of the displacement. For example, the following construction may also be adopted. That is, an optical system (fixed index grating for the correction purpose), which detects the center position (offset) of the periodic modulation, is added. An output signal of the optical system is applied to the modulation factor control circuit 28 so that the modulation factor control circuit 28 performs the control to maintain the offset to be constant.

A rotary encoder may be constructed by applying the linear encoder according to any one of the embodiments described above.

INDUSTRIAL APPLICABILITY

According to the present invention, the photoelectric encoder is realized, which makes it possible to correctly generate the signal indicating the displacement of the movable member even when the grating undergoes the posture fluctuation. Therefore, the photoelectric encoder is especially useful in various environments in which the posture fluctuation easily arises in the grating.

## Claims

1. A photoelectric encoder comprising:

   a light source (11) adapted to radiate an illumination light beam;
   a scale (15) which has a pattern arranged in a predetermined direction;
   a reference member (13) adapted to make displacement relative to the scale and which serves as a reference for the displacement;
   a light-receiver (16) adapted to receive the illumination light beam via the scale and the reference member; and
   a displacement detector (22, 23) adapted to detect the relative displacement of the scale and the reference member based on the illumination light beam received by the light-receiver;
   **characterized by**
   a modulator adapted to periodically modulate the illumination light beam during a period in which the scale and the reference member are relatively displaced;
   wherein the modulator is adapted to periodically modulate a phase difference between a pair of diffracted light beams which are generated by diffraction of the illumination light beam at the reference member and which interfere with each other on the scale (15) and which have optical path lengths different from each other, by periodically modulating a wavelength of the illumination light beam, and
   the pair of diffracted light beams are a +1st-order diffracted light beam and a -1st-order diffracted light beam.

2. The photoelectric encoder according to claim 1, further comprising an optical member arranged to provide the difference between the optical path lengths of the pair of diffracted light beams.

3. The photoelectric encoder according to claim 2, wherein the optical member is a plane-parallel plate provided in an optical path of one of the diffracted light beams.

4. The photoelectric encoder according to any one of claims 1 to 3, wherein the displacement detector further includes a control unit which generates a signal of a light amount of the illumination light beam together with a signal of the displacement and which monitors the signal of the light amount and controls the light source to make the signal of the light amount to be constant.

5. The photoelectric encoder according to claim 1, wherein the scale is formed by a transmissive type diffraction grating having a plurality of grating lines arranged in the predetermined direction.

6. The photoelectric encoder according to claim 1, wherein the light-receiver has a single light-receiving element.

## Patentansprüche

1. Photoelektronischer Positionsgeber mit:

   einer Lichtquelle (11), die dazu eingerichtet ist, einen Beleuchtungslichtstrahl auszusenden;
   einer Skala (15), die ein in einer vorgegebenen Richtung angeordnetes Muster aufweist;
   einem Referenzelement (13), das dazu eingerichtet ist, eine Bewegung relativ zu der Skala auszuführen, und das als eine Referenz für die Bewegung dient;
   einem Lichtempfänger (16), der dazu eingerichtet ist, den Beleuchtungslichtstrahl über die Skala und das Referenzelement zu empfangen; und
   einem Bewegungsdetektor (22, 23), der dazu eingerichtet ist, die relative Bewegung der Skala und des Referenzelements auf der Basis des von dem Lichtempfänger empfangenden Beleuchtungslichtstrahls zu detektieren,
   **gekennzeichnet durch**
   einen Modulator, der dazu eingerichtet ist, den Beleuchtungslichtstrahl während einer Periode, in der die Skala und das Referenzelement relativ zueinander bewegt werden, periodisch zu modulieren;
   wobei der Modulator dazu eingerichtet ist, durch periodische Modulation einer Wellenlänge des Beleuchtungslichtstrahls periodisch eine Phasendifferenz zwischen zwei gebeugten Lichtstrahlen zu modulieren, die durch Beugung des Beleuchtungslichtstrahls an dem Referenzelement erzeugt werden und die auf der Skala (15) miteinander interferieren und die voneinander verschiedene optische Weglängen haben, und
   die beiden gebeugten Lichtstrahlen ein gebeugter Lichtstrahl der Ordnung +1 und ein gebeugter Lichtstrahl der Ordnung -1 sind.

**2.** Photoelektronischer Positionsgeber nach Anspruch 1, mit einem optischen Element, das dazu eingerichtet ist, die Differenz zwischen den optischen Weglängen der beiden gebeugten Lichtstrahlen herzustellen.

**3.** Photoelektronischer Positionsgeber nach Anspruch 2, bei dem das optische Element eine planparallele Platte ist, die in einem optischen Pfad eines der gebeugten Lichtstrahlen angeordnet ist.

**4.** Photoelektronischer Positionsgeber nach einem der Ansprüche 1 bis 3, bei dem der Bewegungsdetektor weiterhin eine Steuereinheit aufweist, die ein Signal erzeugt, das eine Lichtmenge des Beleuchtungslichtstrahls angibt, zusammen mit einem Signal für die Bewegung, und die das Signal für die Lichtmenge überwacht und die Lichtquelle steuert, um das Signal für die Lichtmenge konstant zu halten.

**5.** Photoelektronischer Positionsgeber nach Anspruch 1, bei dem die Skala durch ein Transmissions-Beugungsgitter gebildet wird, das eine Vielzahl von Gitterlinien aufweist, die in der vorbestimmten Richtung angeordnet sind.

**6.** Photoelektronischer Positionsgeber nach Anspruch 1, bei dem der Lichtempfänger ein einzelnes lichtempfangendes Element aufweist.

**Revendications**

**1.** Codeur photoélectrique, comprenant :

une source de lumière (11) adaptée de façon à rayonner un faisceau de lumière d'éclairage ;
une échelle (15) qui comporte un motif disposé dans une direction prédéterminée ;
un élément de référence (13) adapté de façon à effectuer un déplacement par rapport à l'échelle, et qui joue le rôle de référence pour le déplacement ;
un récepteur de lumière (16) adapté de façon à recevoir le faisceau de lumière d'éclairage par l'intermédiaire de l'échelle et de l'élément de référence ; et
un détecteur de déplacement (22, 23) adapté de façon à détecter le déplacement relatif de l'échelle et de l'élément de référence en fonction du faisceau de lumière d'éclairage reçu par le récepteur de lumière ;
**caractérisé par** :

un modulateur adapté de façon à moduler périodiquement le faisceau de lumière d'éclairage durant une période pendant laquelle l'échelle et l'élément de référence sont déplacés de façon relative ;
dans lequel le modulateur est adapté de façon à moduler périodiquement une différence de phase entre une paire de faisceaux de lumière diffractés qui sont générés par la diffraction du faisceau de lumière d'éclairage au niveau de l'élément de référence, et qui interfèrent l'un avec l'autre sur l'échelle (15), et qui ont des longueurs de trajet optique différentes l'une de l'autre, par la modulation périodique d'une longueur d'onde du faisceau de lumière d'éclairage, et
la paire de faisceaux de lumière diffractés sont un faisceau de lumière diffracté du +1$^{er}$ ordre et un faisceau de lumière diffractée du -1$^{er}$ ordre.

**2.** Codeur photoélectrique selon la revendication 1, comprenant de plus un élément optique agencé de façon à produire la différence entre les longueurs de trajet optique de la paire de faisceaux de lumière diffractés.

**3.** Codeur photoélectrique selon la revendication 2, dans lequel l'élément optique est une plaque à plans parallèles disposée dans un trajet optique de l'un des faisceaux de lumière diffractés.

**4.** Codeur photoélectrique selon l'une quelconque des revendications 1 à 3, dans lequel le détecteur de déplacement comprend de plus une unité de commande qui génère un signal d'une quantité de lumière du faisceau de lumière d'éclairage avec un signal du déplacement, et qui contrôle le signal de la quantité de lumière et commande la source de lumière de façon à rendre constant le signal de la quantité de lumière.

**5.** Codeur photoélectrique selon la revendication 1, dans lequel l'échelle est formée par un réseau de diffraction du type à transmission comportant une pluralité de lignes de réseau de diffraction disposées dans la direction prédéterminée.

6. Codeur photoélectrique selon la revendication 1, dans lequel le récepteur de lumière comporte un élément de réception de lumière unique.

Fig. 1

Y
X
Z

DIRECTION OF MOVEMENT

11
12
13
14A
15
16
17
14B
21
LIGHT-RECEIVING CIRCUIT
I

30
LIGHT SOURCE DRIVING CIRCUIT
31
ZERO-ORDER COMPONENT DETECTION CIRCUIT
29
ACTUATOR DRIVING CIRCUIT
26
CLOCK CIRCUIT
22
1ST-ORDER COMPONENT DETECTION CIRCUIT
23
2ND-ORDER COMPONENT DETECTION CIRCUIT
24
3RD-ORDER COMPONENT DETECTION CIRCUIT
25
4TH-ORDER COMPONENT DETECTION CIRCUIT
27
ENCODER SIGNAL PROCESSING CIRCUIT
ENCODER OUTPUT

32
LIGHT AMOUNT CONTROL CIRCUIT
28
MODULATION FACTOR CONTROL CIRCUIT

$I_1$
$I_2$

# Fig. 2

Fig. 3

(a) X=-81°
(b) X=-36°
(c) X=0°
(d) X=+36°
(e) X=+81°

Fig. 4

$\sin \omega t$

22(1ST-ORDER
COMPONENT
DETECTION CIRCUIT)

LPF

$I_1$

TO MODULATION
FACTOR CONTROL
CIRCUIT

$\cos 2\omega t$

23(2ND-ORDER
COMPONENT
DETECTION CIRCUIT)

LPF

$I_2$

$I$

FROM
LIGHT-RECEIVING
CIRCUIT

TO ENCODER SIGNAL PROCESSING CIRCUIT

EP 2 489 989 B1

## Fig. 5

EP 2 489 989 B1

## Fig. 6

(a)  (b)  (c)

X=-81°  X=-36°  X=0°

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3756723 A
- US 6005667 A
- JP 2002243503 A